# EUROPEAN PATENT APPLICATION

(11) **EP 1 923 802 A1**
(43) Date of publication of application: **21.05.2008**
(21) Application number: 07120925.8
(22) Date of filing: 16.11.2007
(51) Int. Cl.: G06F 17/30, G06F 21/00

(54) **Characterization of web application inputs**

(30) Priority: 17.11.2006 US 560984
(71) Applicant: Hewlett-Packard Development Company, L.P., Houston, TX 77070 (US)
(72) Inventor: Caleb, Sima, Alpharetta GA 30004 (US); Kelly, Raymond, Alpharetta GA 30004 (US); Hoffman, William, Alpharetta GA 30004 (US)
(74) Representative: Lloyd, Richard Graham

(57) **Abstract**

The inputs of a web application are detected through a technique such as crawling, and then the characteristics of the inputs are determined. The characteristics are determined by identifying how the inputs react to various probes containing varying characters and varying numbers of characters. As such, the characters allowed by the input are identified, the maximum and minimum number of characters that are accepted and the manner in which the characters are treated by the web application. Further characteristics of the inputs are determined by examining the context of the inputs, the markup language associated with the input, the size of the input, etc. The knowledge regarding the input characterizations can be applied in a variety of settings.

## Description

This application is related to and incorporates by reference, the United States Patent Application entitled WEB APPLICATION ASSESSMENT BASED ON INTELLIGENT GENERATION OF ATTACK STRINGS, filed on November 17, 2006, assigned serial number 11/560,969 and identified by attorney docket number 19006.1080 and the United States Patent Application entitled IMPROVED WEB APPLICATION AUDITING BASED ON SUB-APPLICATION IDENTIFICATION, filed on November 17, 2006, assigned serial number 11/560,929 and identified by attorney docket number 19006.1070, both of which are commonly assigned to the same entity.

### BACKGROUND OF THE INVENTION

The present invention relates to the field of web site analysis, interaction, auditing, and access automation and, more specifically, to a tool that analyzes the inputs of a web application to identify domains of inputs and then using this knowledge to improve the performance of other web site tools such as analyzers, auditors, or the like.

The free exchange of information facilitated by personal computers surfing over the Internet has spawned a variety of risks for the organizations that host that information and likewise, for those who own the information. This threat is most prevalent in interactive applications hosted on the World Wide Web and accessible by almost any personal computer located anywhere in the world. Web applications can take many forms: an informational Web site, an intranet, an extranet, an e-commerce Web site, an exchange, a search engine, a transaction engine, or an e-business. These applications are typically linked to computer systems that contain weaknesses that can pose risks to a company. Weaknesses can exist in system architecture, system configuration, application design, implementation configuration, and operations. The risks include the possibility of incorrect calculations, damaged hardware and software, data accessed by unauthorized users, data theft or loss, misuse of the system, and disrupted business operations.

As the digital enterprise embraces the benefits of e-business, the use of Web-based technology will continue to grow. Corporations today use the Web as a way to manage their customer relationships, enhance their supply chain operations, expand into new markets, and deploy new products and services to customers and employees. However, successfully implementing the powerful benefits of Web-based technologies can be greatly impeded without a consistent approach to Web application security.

It may surprise industry outsiders to learn that hackers routinely attack almost every commercial Web site, from large consumer e-commerce sites and portals to government agencies such as NASA and the CIA. In the past, the majority of security breaches occurred at the network layer of corporate systems. Today, however, hackers are manipulating Web applications inside the corporate firewall, enabling them to access and sabotage corporate and customer data. Given even a tiny hole in a company's Web-application code, an experienced intruder armed with only a Web browser (and a little determination) can break into most commercial Web sites.

The problem is much greater than industry watchdogs realize. Many U.S. businesses do not even monitor online activities at the Web application level. This lack of security permits even attempted attacks to go unnoticed. It puts the company in a reactive security posture, in which nothing gets fixed until after the situation occurs. Reactive security could mean sacrificing sensitive data as a catalyst for policy change.

A new level of security breach has begun to occur through continuously open Internet ports (port 80 for general Web traffic and port 443 for encrypted traffic). Because these ports are open to all incoming Internet traffic from the outside, they are gateways through which hackers can access secure files and proprietary corporate and customer data. While rogue hackers make the news, there exists a much more likely threat in the form of online theft, terrorism, and espionage.

Today the hackers are one step ahead of the enterprise. While corporations rush to develop their security policies and implement even a basic security foundation, the professional hacker continues to find new ways to attack. Most hackers are using "out-of-the-box" security holes to gain escalated privileges or execute commands on a company's server. Simply incorrectly configuring off-the-shelf Web applications leave gaping security vulnerabilities in an unsuspecting company's Web site.

Passwords, SSL and data-encryption, firewalls, and standard scanning programs may not be enough. Passwords can be cracked. Most encryption protects only data transmission; however, the majority of Web application data is stored in a readable form. Firewalls have openings. Scanning programs generally check networks for known vulnerabilities on standard servers and applications, not proprietary applications and custom Web pages and scripts.

Programmers typically don't develop Web applications with security in mind. What's more, most companies continue to outsource the majority of their Web site or Web application development using third-party development resources. Whether these development groups are individuals or consultancies, the fact is that most programmers are focused on the "feature and function" side of the development plan and assume that security is embedded into the coding practices. However, these third-party development resources typically do not have even core security expertise. They also have certain objectives, such as rapid development schedules, that do not lend themselves to the security scrutiny required to implement a "safe solution."

Manipulating a Web application is simple. It is often relatively easy for a hacker to find and change hidden form fields that indicate a product price. Using a similar technique, a hacker can also change the parameters of a Common Gateway Interface (CGI) script to search for a password file instead of a product price. If some components of a Web application are not integrated and configured correctly, such as search functionality, the site could be subject to buffer-overflow attacks that could grant a hacker access to administrative pages. Today's Web-application coding practices largely ignore some of the most basic security measures required to keep a company and its data safe from unauthorized access.

Developers and security professionals must be able to detect holes in both standard and proprietary applications. They can then evaluate the severity of the security holes and propose prioritized solutions, enabling an organization to protect existing applications and implement new software quickly. A typical process involves evaluating all applications on Web-connected devices, examining each line of application logic for existing and potential security vulnerabilities.

A Web application attack typically involves five phases: port scans for default pages, information gathering about server type and application logic, systematic testing of application functions, planning the attack, and launching the attack. The results of the attack could be lost data, content manipulation, or even theft and loss of customers.

A hacker can employ numerous techniques to exploit a Web application. Some examples include parameter manipulation, forced parameters, cookie tampering, common file queries, use of known exploits, directory enumeration, Web server testing, link traversal, path truncation, session hijacking, hidden Web paths, Java applet reverse engineering, backup checking, extension checking, parameter passing, cross-site scripting, and SQL injection.

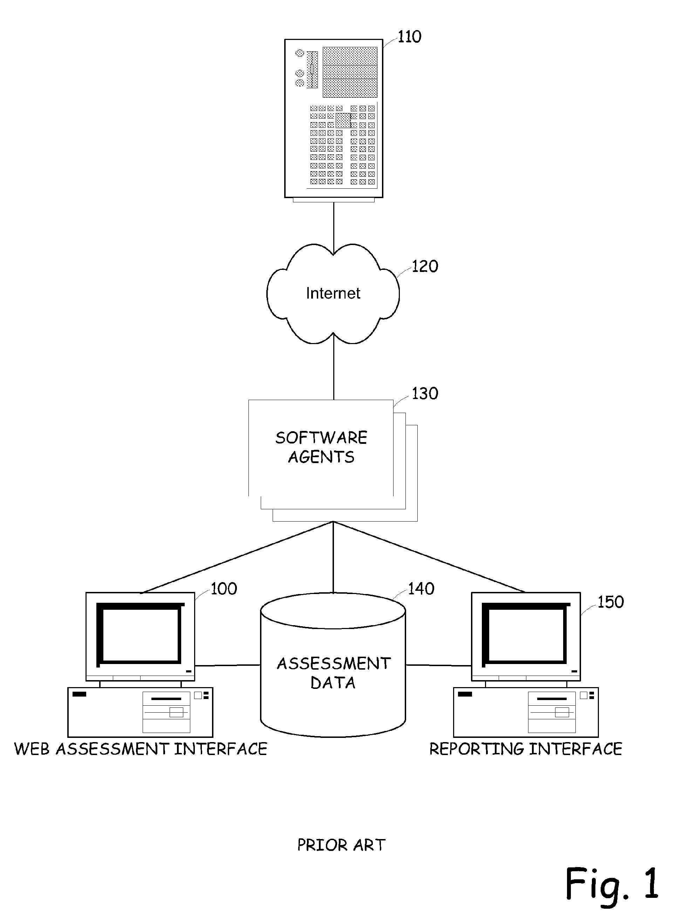

Assessment tools provide a detailed analysis of Web application and site vulnerabilities. FIG. 1 is a system diagram of a typical structure for an assessment tool. Through the Web Assessment Interface **100,** the user designates which application, site or Web service resident on a web server or destination system **110** available over network **120** to analyze. The user selects the type of assessment, which policy to use, enters the URL, and then starts the process.

The assessment tool uses software agents **130** to conduct the vulnerability assessment. The software agents **130** are composed of sophisticated sets of heuristics that enable the tool to apply intelligent application-level vulnerability checks and to accurately identify security issues while minimizing false positives. The tool begins the crawl phase of the application using software agents to dynamically catalog all areas. As these agents complete their assessment, findings are reported back to the main security engine through assessment database **140** so that the results can be analyzed. The tool then enters an audit phase by launching other software agents that evaluate the gathered information and apply attack algorithms to determine the presence and severity of vulnerabilities. The tool then correlates the results and presents them in an easy to understand format to the reporting interface **150.**

One of the popular attacks on web applications is parameter manipulation and forced parameters. In general, parameter manipulation attacks involve the manipulation of data that is transmitted between a browser and a web application. Parameter manipulation attacks can take on a variety of forms, including but not limited to, HTML form field manipulation, HTTP header manipulation, cookie manipulation, and URL manipulation.

HTML form field manipulation involves changing the form field data representing the data input on an HTML page. All of the selections and data entry that a user provides to an HTML page are typically stored as form field values and then sent to the web application as an HTTP request, such as a GET or POST. Hidden fields may also be transmitted to the web application in this manner. The hidden fields are part of the form field but are not displayed or rendered to the screen by the browser. The user is able to manipulate any of the form fields and submit any value the user so desires. To manipulate a form field, the user can select [view source] from the browser window, save the source, edit the source and then reload the page into the web browser. For example, a form field may have a maximum number of characters allowed associated with it. Such a restriction can be imposed in HTML by setting the form field value "maxlength" to an integer representing the number of allowed characters. The user can simply edit this value or delete it all together to remove the restriction on the number of allowed characters.

HTTP header manipulation involves modifying the HTTP header information that is passed from a client to the server during an HTTP request and from a server to a client during an HTTP response. Each header typically includes a line of ASCII text that includes a name and a value. Generally, web applications do not examine the header but, some applications use the header for various purposes and as such, these applications can be vulnerable to this type of attack. Although the typical browser will not allow the header to be modified, a simple PERL routine or a proxy can be used to modify the header of any data send from the browser. An example of an HTTP header manipulation can use the Referer header that is typically sent by a browser and contains the URL of the web page originating the request. Some web sites utilize this header to ensure that the received request actually originated from a page that was originally generated by that web site. This step is performed under the belief that it will prevent a user from editing the source of a page, reloading it and sending it as a request. However, by modifying the Referer header, a user can make such a page look the same as if it came from the original site.

Cookie manipulation involves changing the data residing within a cookie. The cookie is modified at the client end and then sent to the server with a URL requests. More specifically, a Web-based system typically uses a cookie as a reference to data already stored on the server, and operates under the assumption that only a specific user knows the contents of the cookie. This system is vulnerable to attack if a malicious user can predict the cookie that will be assigned to another user. The attacker can then hijack a legitimate user's session by using the counterfeit cookie. Thus, cookie manipulation includes the forging of a cookie to perform the attack. This technique may be quite burdensome in that a large number of attempts may be required depending on how the cookie is created.

URL manipulation is probably the simplest form of parameter manipulation and simply involves changing the parameters or values within the URL string as shown in the address bar of the browser. For example, when submitting HTML forms through a GET, all of the form element names and their values appear in the query string of the next URL the user sees. The URL can easily be tampered with to change the values prior to submitting the query.

It doesn't take a big imagination to realize that the task of checking for parameter manipulation vulnerabilities can be quite daunting, even on the simplest of web applications. The number of permutations and attacks easily build with the complexity of the web application and as such, a large web application with numerous inputs can almost be an impossible assessment task. However, upon examining the code and routines that are used in the building and implementation of a web application, it is apparent that much of the input processing of a web application is performed using a common set of backend processes. It would be advantageous to simply exercise the backend processes for vulnerabilities rather than having to access each of the input areas of the web application. However, from an external perspective, without having specific knowledge regarding the structure and code that makes up a web application, such information is difficult to obtain.

Thus, there is a need in the art for a method and system for conducting vulnerability assessments that can determine structural characteristics about the backend processes of the web application and launch a directed and focused attack with this knowledge. Such a solution should allow for a reduction in the number of checks that must be performed in conducting an assessment, improve the performance or reduce the time required to perform an assessment, and help to reduce the occurrence of false positives. Thus, there is a need in the art for a web site and web applications assessment tool that can tackle the ever increasing complexities of analyzing web sites and web applications in a manner that is accurate, but that is quicker and more efficient than today's technology. The present invention as described herein provides such a solution. In addition, there are other benefits of being able to characterize the inputs of a web application. One such benefit is in identifying sub-applications and conducting a directed attack based on this information such as described in the referenced application entitled IMPROVED WEB APPLICATION AUDITING BASED ON SUB-APPLICATION IDENTIFICATION and identified by serial number _/_,_ and attorney docket number 19006.1070. Other benefits include the automation of configuring applications, using this information to access pages behinds a form, identifying edge attacks as well as other benefits. Thus, there is a need in the art for a technique to assess and characterize the inputs of a web application.

### BRIEF SUMMARY OF THE INVENTION

The present invention, although comprising various features and aspects, in general is directed towards a technique to characterize the inputs of a web application. In general, various techniques are used to identify the inputs of a web application and then to determine the types of information that can be populated into those inputs. One aspect of the present invention is to probe the inputs of a web application to determine the characteristics of the inputs. These characteristics may include the types of characters accepted by the input, the minimum and maximum number of characters that can be considered to be valid input data, and the manner in which the data is viewed or operated upon by the input processors. Another aspect of the present invention is to examine the context of the input to determine characteristics of the input. This involves examining the text, graphics, and overall context of the web page displaying the input as well as examining the markup language code that is associated with the input.

One embodiment of the invention includes a technique for characterizing the inputs of a web application by (a) identifying an input of a web application; (b) operationally determining the characteristics of the input; and (c) contextually determining the characteristics of the input. Once this knowledge is obtained, it can be used in a variety of applications such as web assessment tools, crawlers, automated forms, etc. Operationally determining the characteristics of the input of the web application includes determining what characters are accepted by the input and or determining the number of characters that are accepted by the input. In addition, this may also include determining the manner that the input is treated. More specifically, the operational characteristics can be determined by sending a probe to the web application, the probe including one or more characters; receiving a response from the web application; and then analyzing the response to determine if the one or more characters were accepted. Furthermore, contextually determining the characteristics of the input of the web application includes determining the characteristics of the input of the web application comprises examining the context of the web page in the vicinity of the input. This can be accomplished using a variety of techniques including scraping the web page for matter associated with the input or scraping the web page for textual content describing the input. In addition, contextually characterizing the inputs can include examining the markup language code related to the inputs. For example, this may include parsing the code for textual content describing the input.

The figures and the description below will elaborate on the various aspects and features of the present invention.

### BRIEF DESCRIPTION OF THE SEVERAL VIEWS OF THE DRAWING

FIG. 1 is a system diagram of a typical structure for an assessment tool.

FIG. 2 is a flow diagram depicting a very high-level view of the operation of the present invention in identifying backend processes to assess.

FIG. 3A is a screen shot of the Bank of America sign-in website.

Figs. 3B and 3C are screen shots showing the results of activating link 302 in Fig. 3A.

Fig. 3D is a screen shot showing the results of activating link 308 in Fig. 3A.

Fig. 3E is another screen shot showing the results of activating link 314 in Fig. 3A.

Fig. 4 is a flow diagram illustrating the steps involved in an exemplary embodiment of the present invention to characterize the inputs of a web application.

### DETAILED DESCRIPTION OF THE INVENTION

The present invention brings a significant improvement to web based functionality and tools by employing the use of intelligent engine technology. The present invention introduces technology that should significantly change how customers and analysts evaluate web application assessment products. Although the present invention may not render prior art techniques obsolete, nonetheless, the present invention provides a solution that improves the performance, reliability and efficiency of web application assessment products. In general, the present invention utilizes a combination of intelligent engines and static checks to provide a thorough and efficient web application assessment product.

Advantageously, the present invention enables security professionals to complete assessments much faster, virtually eliminate false positives, and increase the number of true vulnerabilities discovered during the assessment. Good measuring sticks to compare the current state-of-the-art static checking technology with the technology of the present invention include the amount of time required to conduct an assessment and the number of false positives identified. The present invention provides improvements in both of these categories.

In general, the present invention analyzes the structure of a website, through external probing, to identify the core backend processes that drive the user interface or input portions of the web application. Armed with this knowledge, the assessment tool can focus on attacks to identify vulnerabilities of these background processes rather than having to look for vulnerabilities for each and every input. Advantageously, this allows the vulnerability assessment process to proceed much more quickly, and allows for a deeper more thorough examination of the backend process.

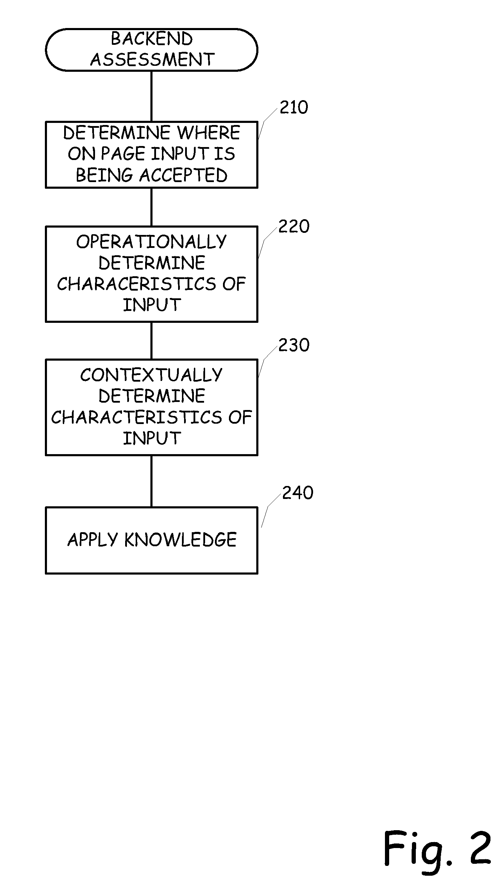

FIG. 2 is a flow diagram depicting a very high-level view of the operation of the present invention in characterizing the inputs of a web application. The present invention can be incorporated into a variety of embodiments, including an engine that drives an assessment tool or an automated form filling tool, etc. Describing the operation in an assessment tool engine embodiment, initially, the engine determines what locations on a web application generated web page accept inputs **210.** This determination may include identifying if the input is within a frame structure, a form, a selection box, etc. The engine then operates to identify as much information about each of the inputs as possible and thus, characterize the inputs. Embodiments of the present invention employ several techniques, operations and functionalities in an effort to characterize the inputs, not all of which are required in any one embodiment and which various combinations or individual techniques may in and of themselves be novel. One of the techniques used to characterize the inputs is to operationally determine the characteristics of the inputs **220.** This technique involves etermining what types of inputs are allowed on that page, or at particular data entry locations **220.** For instance, this process involves serially sending different characters, symbols, strings, etc. to the data input of the web page and monitoring the responses. For instance, letters of the alphabet, numbers, symbols, etc. can be sent to the input to determine categories of accepted inputs as well as specific accepted inputs.. In addition, determinations can be made as to whether the input responds differently to upper-case versus lower-case letters, the length of data entries, interprets digits as integer numbers, dates, values, etc. or if they are just viewed as standard characters. This technique can also be employed to determine the minimum and maximum number of characters that are accepted by the input. Thus, in exemplary embodiments, this may be a very systematic and focused procedure that includes basic rudimentary steps that are employed to identify the characteristics of the various inputs. The monitoring of the responses from the web application can be accomplished in a variety of manners, such as using a JavaScript parser to parse the response and determine what types of input values are accepted or rejected or performing some other analysis. For instance, a simple Boolean type analysis can be utilized to distinguish between rejected entries and accepted entries and then characterizing the inputs based on this information.

Another technique for characterizing the input is contextually determining the characteristics of the inputs **230.** This process involves examining the content of the webpage surrounding or related to the input to determine if there is any information regarding the input to be discovered. This information is used to further characterize the various inputs of the web application.

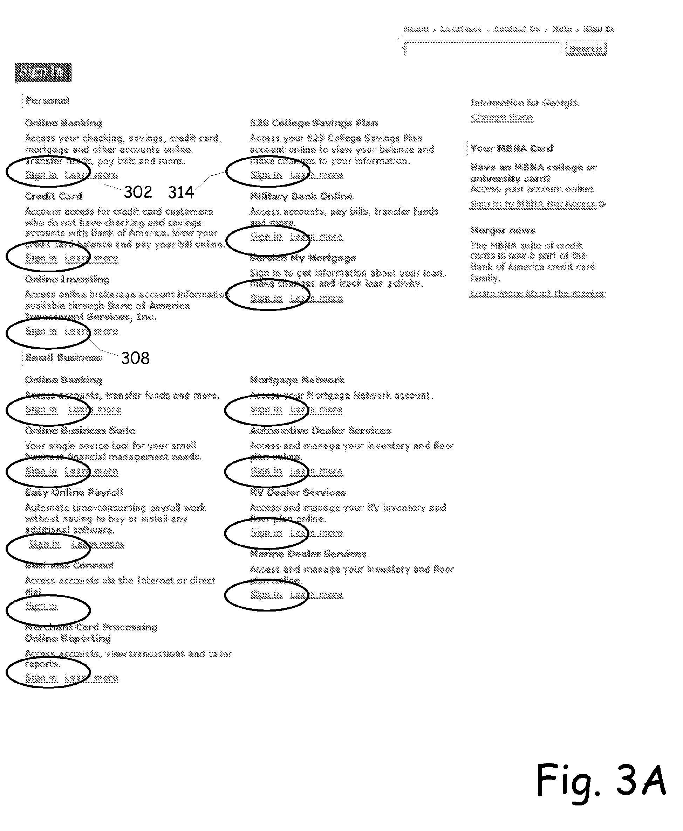

Once the characteristics of the inputs are identified, this knowledge can be applied in a variety of manners to help improve web application utilization and analysis **230.** As a non-limiting example, the inputs can be grouped based on these characteristics and used to support a sub-application auditing tool as described in the referenced patent application. These groups of characteristics basically identify inputs that are driven and controlled by common backend processes. For instance, if a web application has multiple login locations, such as www.bankofamerica.com, a common backend process may be used for receiving and validating the user name and another common backend process for receiving and validating the password - or in fact a single backend process may handle both. FIG. 3A is a screen shot of the Bank of America sign-in web page. The illustrated screen shot includes 15 different sign-in links that can be selected by a user. These links are circled in the figure. Activating each link takes the user to another web page that allows the user to login. The presentations of these various login screens are different from the user's perspective.

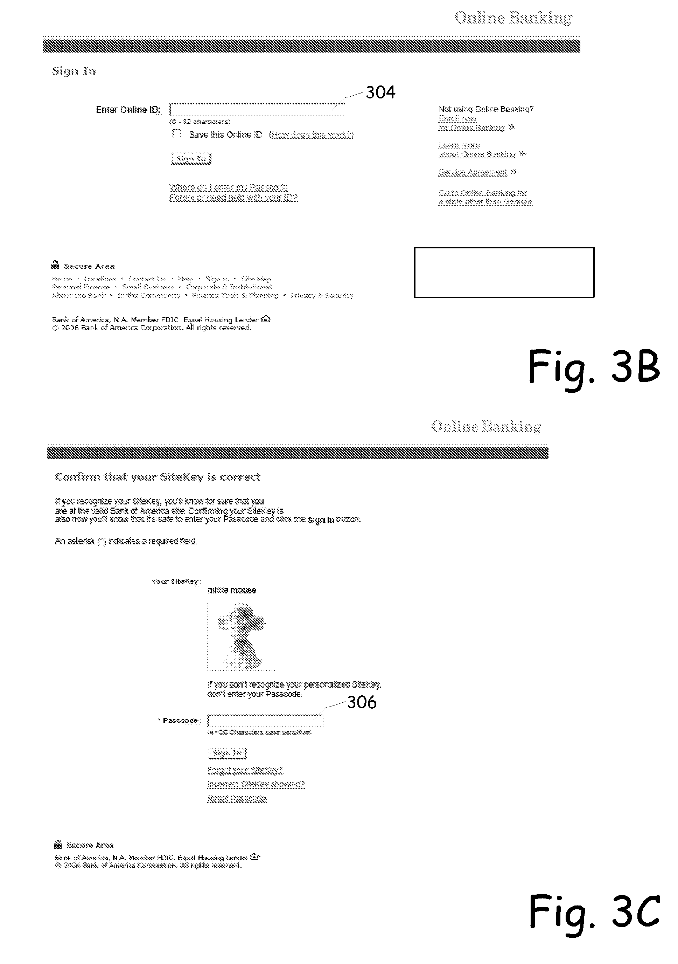

For example, Figs. 3B and 3C are screen shots showing the results of activating link **302** in Fig. 3A. In Fig. 3B, the user is presented with an Online ID field **304** and after successfully entering the Online ID, the user is taken to the web page illustrated in Fig. 3C, where the user is presented with a Password field **306.** Text below the password field **306** indicates that the password field **306** accepts 4-20 characters and is case sensitive. To enter the Online ID and password, the user is required to enter the first value, send this information to the web application and then be directed to the screen shown in Fig. 3C. At this point, the user can enter his or her password and again, submit this to the web application. From examining this web page sequence, it is apparent that backend process requires Online ID verification prior to conducting password verification.

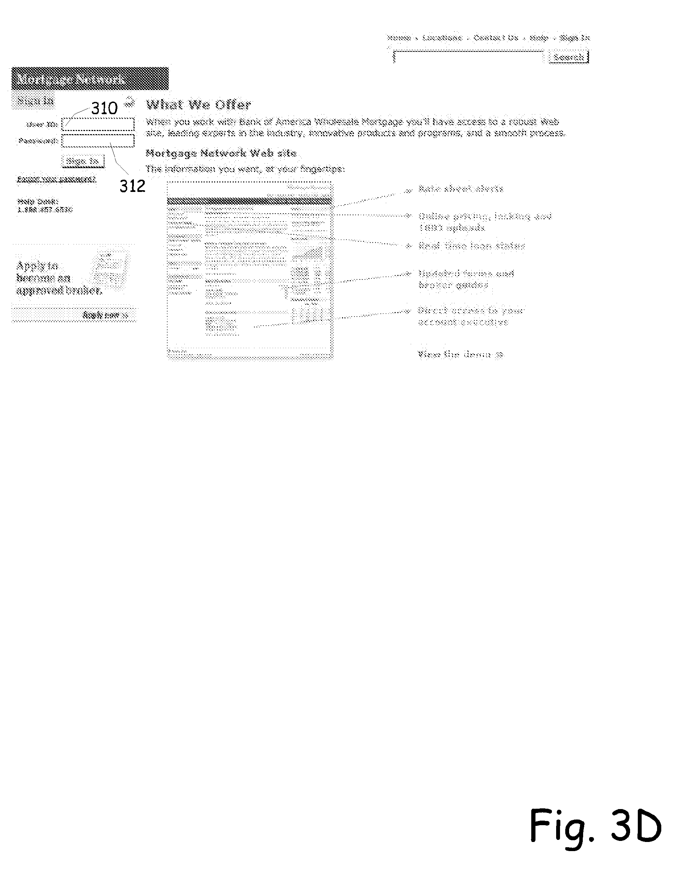

Fig. 3D is a screen shot showing the results of activating link **308** in Fig. 3A. In Fig. 3D, the user is presented with a user ID field **310** and a password field **312** all on the same web page. In this screen, the user is required to enter his or her user ID and password prior to sending this information to the web application. Thus, it appears that the backend process for handling the user ID and password for this screen may be different than the one used to process the online ID and password in Figs. 3B and 3C.

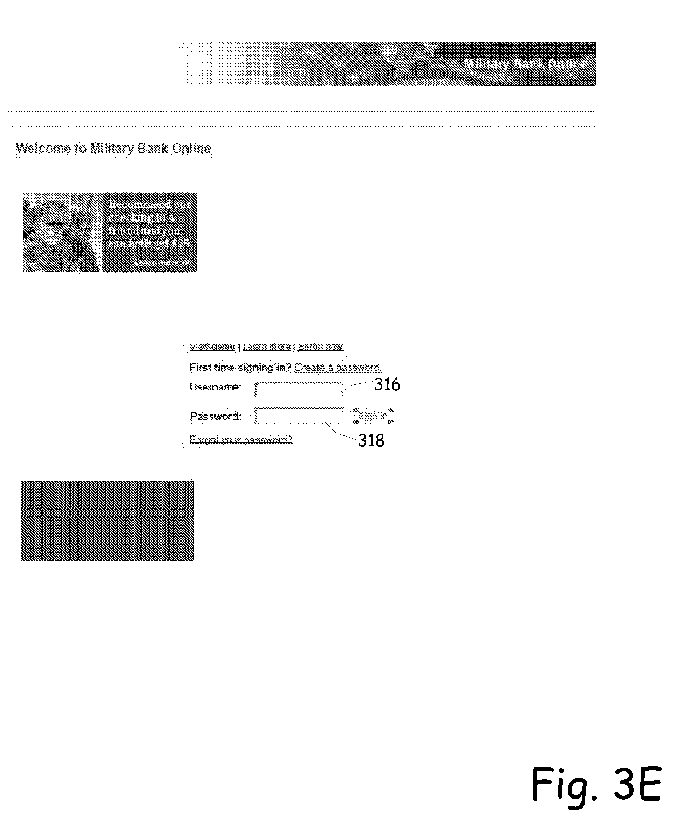

Fig. 3E is another screen shot showing the results of activating link **314** in Fig. 3A. This is the sign-in for military banking. In Fig. 3E, the user is presented with a User ID field **316** and a password field **318.** The structure presented in Fig. 3E is similar to that presented in Fig. 3D and as such, the backend process used to receive and verify the user ID and the password has a high chance of being common for these two screens. On the other hand, several of the sign-in screens accessible from links displayed in the web page shown in Fig. 3A adhere to the structure of Figs. 3B and 3C and as such, they most likely use a common backend process. Thus, from this simple illustration, it is demonstrated how two groupings of inputs can be identified.

Thus, in this example, once the inputs are categorized, the vulnerability assessment tool can then begin attacking a subset of the inputs in each category. Advantageously, this application of the present invention can greatly reduce the workload in performing an assessment without compromising the integrity of the assessment. In fact, with the processing time saved, deeper and more thorough attacks can be conducted on the backend processes than what would be allowed if the tool had to test each and every input field. It should also be appreciated that the groupings of the inputs can also be utilized in various embodiments of the present invention to lessen the required workload. For instance, if the context of a characterized input is similar to an uncharacterized input, the embodiment can make some assumptions that may greatly reduce the amount of time required to characterize the new input. As an example, assume the characterized input is a telephone number and it has been shown to accept only numbers, parenthesis, spaces and hyphens and the input is limited to a minimum of ten characters and a maximum of 14 characters. If the context of the input field includes the word "phone", then an uncharacterized input that also includes a word containing "phone" in its vicinity may also be a telephone number. In this situation, rather than conducting a complete test sequence on the input, the known allowed and rejected values can easily be used to probe the input and verify that it is also limited in the same manner.

Thus, one embodiment of the present invention operates to conduct a crawl of a web site to identify all of the inputs for the web site. The embodiment may then interrogate the web application and use the answers or responses from the web application as feedback for deciding what the next steps in the attack will be. By characterizing the behavior of the web application inputs, information about the backend processing can be obtained. The attack can then focus on looking for vulnerabilities on a backend process level rather than at the user interface level - a much narrower and more focused approach.

As previously mentioned, one of the aspects of the present invention is to characterize the various inputs of the web application. One method to conduct this task is send various data to the web application and watch how the web application responds. For instance, the accepted length of a data string can be identified by sending various string lengths and examining which string lengths are accepted and which are rejected. Likewise, the set of acceptable characters can also be determined. The process may involve sending groups of characters, representative characters from various classes of characters, or using other techniques to characterize this aspect of the inputs.

Other information about the input can be determined by examining the context of the input field. For instance, as illustrated in Figs. 3A-3E, the password field includes textual information in the proximity of the box. Namely, this textual information indicates that the password field is case sensitive and accepts 4-20 characters. This information can be obtained by scraping the screen or searching the source file. As such, fields that include labels such as password, passcode, PIN, access code, etc. may initially be tagged as potentially similar input fields using common backend processes. In addition, the HTML code can be searched to identify other characteristics of the input fields in an effort to group them. All of this information together can help to group the various input fields based on the characteristics of what data they accept and as such, provide a good indication as to commonality of backend processes.

These techniques may also be used to characterize how the web application interprets the input data. A library of heuristics may be utilized in helping to identify or categorize the various input fields. For instance, if it is determined that a particular input field accepts only 5 characters and the character set is limited to digits ranging from 0 to 9, then there is a high probability that the field is for entering zip codes. Furthermore, by scraping the screen for the term zip or zip code in close proximity to the input field, this presumption can be further confirmed. Other input fields for the web application that have similar characteristics can be grouped together and only a subset of these input fields will need to be assessed for vulnerabilities. Similar heuristics can be applied for various other fields such as, but not limited to, the following examples:

age: maximum of three characters, character set includes numbers from 0 to 9 and only a blank, 0 or 1 in the most significant location when three characters are submitted.

name: maximum of 20 characters, character set includes only letters from A-Z and a-z.

phone number: maximum of 14 characters, character set includes numbers 0-9 and the following characters: "(", ")" space and "-"

In addition, these techniques can be used to determine if the input interprets the data as a text string or as number.

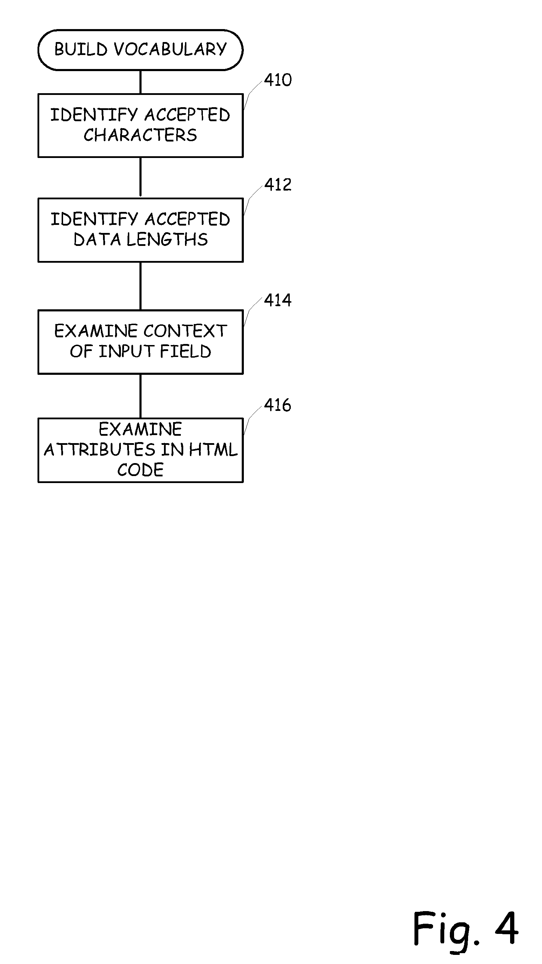

Fig. 4 is a flow diagram illustrating the steps involved in an exemplary embodiment of the present invention to characterize the inputs of a web application. Initially a crawl may be conducted to find the inputs or the inputs may otherwise be identified. Then, for each input the characters or symbols that are accepted by that input are determined **410.** This process may simply involve sending one or more characters or symbols at a time to determine which ones result in invoking an error message. The process may also include identifying the length of accepted inputs **412.** Again, this can be conducted in a variety of manners such as starting with one character and working up until a string length is rejected, or a more robust algorithm can be employed to reduce the number of steps required to identify the maximum length. In addition, for fields that accept numeric values only, algorithms can be employed to determine the maximum range of accepted number, the response to negative numbers, etc. Further characteristics are determined by examining the context of the input field **414.** As described above, this may include scraping the screen for text, but may also include looking at other attributes such as, titles of the page, color schemes, graphics, etc. that may provide hints as to the purpose of the input field. Also, the HTML source code can be searched to identify attributes and limits imposed on the input field **416.**

As previously mentioned, the characterization of the web application inputs can be greatly beneficial for several applications. One application, as previously mentioned, is in conducting sub-application based audits of a web application. However, the characterization of the inputs may also help facilitate web crawling. For instance, characterizing the inputs allows a crawler to know what values to enter into the various fields of a form to gain access to the web pages behind the form. As a specific example, the screen scraper aspect of the present invention can identify all the fields that include an asterisk in the proximity of the field - indicating that inputs are required. With this knowledge, the crawler can ensure that these fields are populated and disregard the other fields and still gain access to the pages behind the form.

Likewise, the present invention advantageously can be used for automatically filling in web forms or pre-populating certain form information. For example, if the present invention is incorporated into a browser application, when a web page loads - especially a web based form - the present invention can characterize the inputs as they are rendered. The application can then examine the user's information or cookie files to obtain information for populating known fields in the form. The present invention can similarly be used in automating the process of configuring an application. Embodiments of the present invention can examine the inputs and pushed text messages of an application and logically figure out what needs to be done next. For instance, as a simple and non-limiting example, after an application loads, the present invention can detect the presentation of a window requesting the user to select a YES button to reboot the computer. Embodiments of the present invention could automatically detect and actuate this function. Similarly, in a web application, once a form is completed, the invention could identify a submit button and automatically actuate it.

It should be appreciated that the embodiments and specific examples provided in this description are provided as non-limiting examples and as such, even though they may individually be considered as novel, should not be construed as the only novel implementations or configurations of the present invention. The described embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons of the art. The scope of the invention is limited only by the following claims.

## Claims

1. A method for characterizing the inputs of a web application, the method comprising the steps of:
identifying an input of a web application;
operationally determining the characteristics of the input;
contextually determining the characteristics of the input; and
applying the input characterization knowledge.

2. The method of claim 1, wherein the step of operationally determining the characteristics of the input of the web application comprises determining what characters are accepted by the input.

3. The method of claim 1, wherein the step of operationally determining the characteristics of the input of the web application comprises determining the number of characters that are accepted by the input.

4. The method of claim 1, wherein the step of operationally determining the characteristics of the input of the web application comprises determining the manner that the input is treated.

5. The method of claim 1, wherein the step of operationally characterizing the input further comprises:
sending a probe to the web application, the probe including one or more characters;
receiving a response from the web application; and
analyzing the response to determine if the one or more characters were accepted.

6. The method of claim 5, further comprising the step of repeating the steps until all of the characters accepted by the web application input have been identified.

7. The method of claim 1, wherein the step of contextually determining the characteristics of the input of the web application comprises examining the context of the web page in the vicinity of the input.

8. The method of claim 7, wherein the step of examining the context of the web page in the vicinity of the input comprises scraping the web page for matter associated with the input.

9. The method of claim 7, wherein the step of examining the context of the web page in the vicinity of the input comprises scraping the web page for textual content describing the input.

10. The method of claim 1, wherein the step of contextually determining the characteristics of the input of the web application comprises examining the markup language code related to the inputs.

11. The method of claim 10, wherein the step of examining the markup language code related to the input comprises the step of parsing the code for textual content describing the input.

12. The method of claim 1, further comprising the step of crawling the web application to identify the input.

13. The method of claim 12, further comprising the step of repeating the steps for each input of the web application.

14. A method for characterizing the inputs of a web application, the method comprising the steps of:
crawling the web application to identify the inputs;
for each identified input, operationally determining the characteristics of the input by:
sending a series of probes to the input;
receiving responses to the probes from the web application;
analyzing the response; and
for each identified input, contextually determining the characteristics of the input by:
examining content in the proximity of the input; and
examining the markup language code associated with the input.

15. The method of claim 14, wherein the step of sending a series of probes to the input further comprises sending probes to identify the characters accepted by the input.

16. The method of claim 14, wherein the step of sending a series of probes to the input further comprises sending probes to identify the number of characters accepted by the input.

17. A method for characterizing the inputs to a web application, the method comprising the steps of:
crawling the web application to identify the inputs;
for each identified input, characterizing the input by:
sending probes with various characters and varying numbers of characters to the input;
receiving responses to the probes from the web application;
analyzing the response;
parsing the HTML code of the web site for textual information related to the input; and
scraping the web page to identify descriptive material about the input.
